(19) Europäisches Patentamt
European Patent Office
Office européen des brevets

(11) **EP 2 783 546 B1**

(12) **EUROPEAN PATENT SPECIFICATION**

(45) Date of publication and mention
of the grant of the patent:
**09.01.2019 Bulletin 2019/02**

(21) Application number: **12851722.4**

(22) Date of filing: **21.11.2012**

(51) Int Cl.:
*H04W 4/18* (2009.01)   *H04W 4/02* (2018.01)
*H04W 8/00* (2009.01)

(86) International application number:
**PCT/US2012/066295**

(87) International publication number:
**WO 2013/078340 (30.05.2013 Gazette 2013/22)**

(54) **Proximity detection of devices based on information communicated via an audio channel**

Näherungsdetektion von Geräten basierend auf Informationen, die über einen Audiokanal übermittelt werden

Détection de proximité des dispositifs basée sur des informations communiquées via un canal audio

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2011   US 201161562201 P**

(43) Date of publication of application:
**01.10.2014   Bulletin 2014/40**

(73) Proprietor: **Google LLC**
**Mountain View, CA 94043 (US)**

(72) Inventors:
• **HUIBERS, Andrew G.**
  **Mountain View, California 94040 (US)**
• **GABAYAN, Kevin N.**
  **Mountain View, California 94040 (US)**
• **RAPHAEL, Seth T.**
  **Mountain View, California 94040 (US)**

(74) Representative: **Maikowski & Ninnemann**
**Patentanwälte Partnerschaft mbB**
**Postfach 15 09 20**
**10671 Berlin (DE)**

(56) References cited:
WO-A1-2009/014438    WO-A2-2010/134817
US-A1- 2006 046 709    US-A1- 2006 052 057
US-A1- 2007 275 768    US-A1- 2009 233 551
US-A1- 2010 013 711    US-A1- 2010 332 668
US-A1- 2011 268 101

## Description

## BACKGROUND

This disclosure relates to communication devices. Setting up a communication session between two devices (e.g., two smartphones) is often cumbersome. Therefore, what are needed are methods and systems for facilitating communication between devices.

Document WO 2010/134817 A2 discloses a system for identifying proximate devices comprising a correlation server for correlating data received from the devices to match two or more of the devices and an application server for carrying out an application involving matched devices. The devices are mobile consumer devices. It further discloses the devices being identified based upon audio identifiers produced by the devices, where audio identifiers are constituted by a sound signal produced by a loudspeaker, the sound signal consisting of multiple tones and/or pulses so as to be able to distinguish a plurality of different identifiers and/or time stamps.

Document US 2009/233551 A1 (HAARTSEN JACOBUS [NL] ET AL) discloses a solution allowing wireless communication terminals to determine the distance between them by using acoustic-based ranging synchronized to RF communicating signals, so that users can travel away from each other and then later find one another back.

Document US 2010/013711 A1 discloses a system for determining position of a device. A tag disclosed therein transmits signals having at least two different frequency components. The signals are receivable by at least some of a plurality of spaced receivers. Each receiver, in response to receiving a signal measures respective phases of the first and second frequency components and a frequency offset between the tag and the receiver. The frequency offset is dependent upon a difference in frequencies of respective clocks in the tag and the receiver. A position processor obtains a difference in phases of the first and second frequency components for a signal. A frequency offset between the receiver and tag and determines the position of the tag in dependence upon the difference between respective phases of the first and second frequency components and in dependence upon the frequency offset.

## SUMMARY

The present application is directed to subject-matter as disclosed by the appended claims.

According to claim 1, a method for matching devices is provided, the method comprising: transmitting, by a first device, a first audio signal that encodes a first code over an audio channel that is shared between the first device and a second device; transmitting, by the second device, a second audio signal that encodes a second code over the audio channel; receiving, by the first device, the second audio signal over the audio channel, and extracting, by the first device, the second code from the second audio signal; receiving, by the second device, the first audio signal over the audio channel, and extracting, by the second device, the first code from the first audio signal; sending, by the first device, the second code to a server; sending, by the second device, the first code to the server; and upon receiving the first code from the second device and the second code from the first device, determining, by the server, that the first device is in proximity to the second device. Therein it is provided that the first and second devices transmit the first and second audio signals at audio frequencies outside the range of frequencies readily detectable by a human ear; and the first and second devices raise the audio volume during the transmission of the first and second audio signals and restore the audio volume upon completing said transmission.

Independent claims 7 and 13 provide a system, and a method for matching devices, respectively. The dependent claims are directed towards specific embodiments.

Some further embodiments described in this disclosure provide methods and/or systems to facilitate communication between devices. Some embodiments include a first device, a second device, and a server, wherein the first device configured to periodically transmit a first audio signal that encodes a first code over an audio channel that is shared between the first device and a second device, and the second device is configured to periodically transmit a second audio signal that encodes a second code over the audio channel.

In some further embodiments, the first device is further configured to determine a distance between the first device and the second device based on the second audio signal. In this disclosure the term "based on" means "based solely or partly on." Specifically, in some embodiments, the second audio signal includes a chirp, and the first device is configured to determine the distance between the first and the second device based on the chirp and the timestamps of the audio signal that was sent by the device and the audio signal that was received by the device. Similarly, in some embodiments, the second device is further configured to determine a distance between the first device and the second device based on the first audio signal. Specifically, in some embodiments, the first audio signal includes a chirp, and the second device is configured to determine the distance between the first and the second device based on the chirp and the timestamps of the audio signal that was sent by the device and the audio signal that was received by the device.

In some further embodiments, the first device is further configured to determine a relative velocity between the first and second devices based on the second audio signal. In some embodiments, the second device is further configured to determine a relative velocity between the first and second devices based on the first audio signal.

## BRIEF DESCRIPTION OF THE FIGURES

FIG. 1 illustrates a system in accordance with some embodiments described herein.

FIG. 2 presents a flowchart that illustrates a process for transmitting a code in accordance with some embodiments described herein.

FIG. 3 presents a flowchart that illustrates a process for receiving a code in accordance with some embodiments described herein.

FIG. 4 presents a flowchart that illustrates a process that may be performed by a server in accordance with some embodiments described herein.

FIG. 5 presents a flowchart that illustrates a process that may be performed by a device in accordance with some embodiments described herein.

FIG. 6 presents a flowchart that illustrates a process that may be performed by a device in accordance with some embodiments described herein.

FIG. 7 illustrates a computer in accordance with some embodiments described herein.

FIG. 8 illustrates an apparatus in accordance with some embodiments described herein.

## DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the scope of the present invention. Thus, the present invention is not limited to the embodiments shown, but is to be accorded the widest scope consistent with the principles and features disclosed herein.

The data structures and code described in this detailed description are typically stored on a non-transitory storage medium, which may be any tangible device or medium that

can store code and/or data for use by a computer system. A non-transitory storage medium includes, but is not limited to, volatile memory, non-volatile memory, magnetic and optical storage devices such as disk drives, magnetic tape, CDs (compact discs), DVDs (digital versatile discs or digital video discs), or other tangible media, now known or later developed, that is capable of storing information.

The methods and processes described in the detailed description section can be embodied as code and/or data, which can be stored in a non-transitory storage medium as described above. When a computer system reads and executes the code and/or data stored on the non-transitory storage medium, the computer system performs the methods and processes embodied as data structures and code and stored within the non-transitory storage medium.

Furthermore, the methods and processes described below can be included in hardware modules. For example, the hardware modules can include, but are not limited to, application-specific integrated circuit (ASIC) chips, field programmable gate arrays (FPGAs), and other programmable-logic devices now known or later developed. When the hardware modules are activated, the hardware modules perform the methods and processes included within the hardware modules.

In some embodiments, each device may transmit information (e.g., a code or a unique sequence of bits) over a shared audio channel. Nearby devices may receive the information over the shared audio channel. This information may be sent to a server.

For example, in some embodiments, the code can be 32 bits with 16 data bits and 16 error-correction/check bits. The error-correction/check bits may be generated using Reed-Muller error correcting code. The signal can be generated using Frequency Shift Keying (FSK) on a per-bit basis, e.g., bit "0" may be represented by an audio signal with frequency 18228 Hz, and bit "1" may be represented by an audio signal with frequency 18522 Hz. Further, in this transmission scheme, each bit may be 600/44100 seconds long.

In general, the audio frequencies that are used for transmitting the code may be selected to be outside the range of frequencies that a human ear can readily detect. The length of time of each bit can be large enough so that the receiving device can reliably detect the audio transmission.

In some embodiments the code may be transformed using a coding scheme before it is sent over the audio channel. For example, the system may transform the code into a sequence of bits to ensure that there are between 13-19 "1"s and 13-19 "0"s in the transmitted code. This can be helpful to ensure that the transmitted signal does not include only a few 0s or 1s, which may cause errors during reception.

In some embodiments, the device may control the volume when the audio signal is transmitted (e.g., the volume may be raised). Once the audio signal has been sent, the volume may be restored to its original level.

Many variations and modifications will be apparent to practitioners having ordinary skill in the art. For example, the number of bits in the code may be varied, the communication schemes may be varied (e.g., the system may use different frequencies in FSK and/or use a different scheme altogether, e.g., phase shift keying, amplitude shift keying, quadrature amplitude modulation, etc.). Different detection schemes may be used, e.g., coherent and incoherent analysis windows. The code may have gaps to help with full bit or partial bit alignment. The signal may be mixed with audible sounds (data watermarking). The transmitted signal may include a preamble and/or a trailer to facilitate alignment. The code may be transformed to ensure bit transitions in a code to enable inter-bit timing.

Other modifications and variations include using a staircase frequency scheme (which may help with alignment), using an agreed upon frequency sequence may be pseudorandom in nature (e.g., by using secure frequency hopping techniques). In some embodiments, the device may sweep frequencies used for transmitting "0" bits and "1" bits (which may help with correlation alignment).

The transmitted signal may include other information in addition to the code. For example, the device may transmit a time stamp that indicates the time the code was received, e.g., the device may transmit multiple audio codes with different timestamps (note that the difference between the timestamps can be very accurate).

Note that, in some embodiments described herein, multiple devices share the same audio channel. This is different from systems (e.g., acoustic modems) where send and receive channels are separate. Some embodiments may be able to detect collisions, i.e., when multiple device transmit at the same time. In some embodiments, the communication is only one-way, i.e., a device may only be capable of transmitting codes, and another device may be only capable of receiving transmitted codes. Again, embodiments that only support a one-way communication are different from techniques that require two-way communication.

In some embodiments, the device may use the amplitude of the received audio signal to estimate a distance between the two devices (i.e., the transmitting and receiving devices). In some embodiments, a device may use the Doppler effect to determine a relative velocity between the transmitting and receiving devices (e.g., by determining a frequency shift in the received audio signal). In some embodiments, the timestamps that indicate when the audio codes are sent and received can be used to measure the time of flight (and thus the distance) between the transmitter and the receiver.

In some embodiments, device and/or station detection may be restricted based on a radius, e.g., audio signals from only those devices and/or stations whose signal strength is greater than a given threshold (which effectively imposes a radial restriction) are considered for further processing. In some embodiments, the system may allow multiple receivers. In some embodiments, the system may use rapid sampling of distance metrics for bump gesture detection (e.g., a bump gesture is a movement of the device or of a body part of the device user that indicates that the device user intends to communicate information between the device and another device).

Some embodiments may use timestamps of the transmitted audio signal and their relation to detected events (e.g., hand gestures that indicate that the user desires to communicate with another device). In some embodiments, the code may be sent using a chirped signal (instead of a constant frequency signal). A chirp is a signal in which the frequency is varied in a predetermined manner (e.g., the frequency may be swept from one value to another value in a predetermined fashion). A chirp can help determine the time of flight accurately.

In some embodiments, the device may use a shared microphone and/or speaker to communicate the audio signals (e.g., the same microphone and/or speaker that are used by a telephone function of the device). In other embodiments, the device may include dedicated hardware for transmitting and receiving the code over an audio channel (e.g., a microphone and/or speaker that is separate from those that are used by a telephone function of the device).

In some embodiments, a device can transmit repeated 32-bit burst codes of duration 0.435 seconds. Each symbol encodes 1 bit and has 2 possible values. Each device (e.g., a smartphone or a station) has an assigned code. In each code, there are minimum of 13 "0"s and 13 "1"s (code space ~ 3.5B). If the device is a smartphone, the device may have random waits of 16 to 300 symbol durations = 0.218 to 4.08 seconds between code transmissions. If the device is a station, the gap between successive transmissions may be small, e.g., 0.2 secs.

In some embodiments, two pairs of frequencies are used for FSK. For communication between two smartphones, the following frequencies may be used: 18228 Hz (for a 0 bit) and 18524 Hz (for a 1 bit). For communication between a smartphone and a stationary object (e.g., a point-of-sale apparatus), the following frequencies may be used: 19110 Hz (for a 0 bit) and 19404 Hz (for a 1 bit). In some embodiments, the frequencies may be chosen such that there is an integer number of cycles per 150 samples at 44100 Hz. This may allow the detection filter to be implemented in a computationally efficient manner. In addition, this can help ensure that every bit at a given frequency is in-phase, which enhances detection. In some embodiments, each symbol (e.g., bit) can be 600/44100 Hz in duration = 13.6 msec long. In some embodiments, the devices are listening all the time, and thus can detect the codes that they transmitted.

In some embodiments, the code is transmitted using a trapezoid window, with an end cap length of 50 samples. In other embodiments, the code may be transmitted using a smooth ramp from one frequency to another, so that the code ends up at the correct phase for the next bit, for inter-symbol transitions. Windowing can help ensure that the audio signal is inaudible to users.

Some embodiments use two detectors to detect a transmitted code. A signal detector which looks at an input sample of length 31.75 * (symbol duration) long. A noise detector which looks at an input sample of length 8 * (symbol duration) long.

In some embodiments, the detector may include taking the dot product of the input signal with sine and cosine at the frequency of interest, and taking the root of the sum of the squares of these two components to get the amplitude. In some embodiments, the dot product calculation is only 150 samples long. To calculate longer dot products, subcomponents may be added. Note that this is possible if the frequencies that are being used are such that f * 150 / 44100 is an integer. In a general case, a Fourier transform may be used in the detector.

In some embodiments, the device can calculate the filters every 150 samples == ¼ of the symbol length. This means the detection may be misaligned with our transmission +/- 75 samples, or +/- ⅛ symbol. In some embodiments, the signal detector at 31¾ length is guaranteed to be fully within the 32 length code at one step (and only one).

In some embodiments, the noise detector can include 2 components which have a gap of 32¼ symbols between them. Thus, in some embodiments, there is at least one step for which the code burst is completely avoided and only noise is measured.

In some embodiments, for every step (every ¼ symbol of the input stream), the device may calculate signal-to-noise ratio (S/N). If S/N is over 10, and a maxima in an 8-step (2 symbol) window, then the system may estimate the code at the S/N maxima. In some embodiments, the device may further filter the signal so that the device does not report its own code. The S/N threshold that is used for determining whether or not to estimate the code may be hard coded or configurable.

In some embodiments, the device can use ¾ * (symbol duration) filters for code estimation. A reason for this is that since the alignment error (in some embodiments) is +/- ⅛ we can guarantee that our detector is fully within a symbol for some step. We estimate the code at 4 steps around the best S/N step. In some embodiments, for each of 4 adjacent step positions, we calculate 2 things, the 2nd of which is used to find the actual code. The first value that is calculated is the sum absolute amplitude difference, i.e.,

$$d = \sum_{n=1}^{32} amp_n(f_1) - amp_n(f_0),$$

where $amp_n(f)$ is the amplitude of frequency component $f$ for the $n^{th}$ symbol.

If we have the correct symbol phase, it is expected that this difference will be at a maxima, because a (¾-symbol-length) filter for a bit will have either completely $f_0$ frequency content, or $f_1$ content. The maximum difference value and the symbol for which the value attains the maximum can be stored.

The second value that can be computed is the code symbols & symbol separation. Specifically, for all 32 bits, calculate: $e_n = (amp_n(f_1) - amp_n(f_0)) / (amp_n(f_1) + amp_n(f_0))$. Note that $e_n \in [-1.0, 1.0]$. In a noiseless system $e_n$ is 1.0 for a "1" and -1.0 for a "0". In some embodiments, we know there are at least 13 0's and 13 1's. So we sort the $e_n$ values from lowest to highest (i.e., $e_0$ corresponds to the lowest e value and $e_{31}$ corresponds to

the highest e value) and then estimate the average e values for "0" and "1" as follows:

$$\overline{e0} = \sum_{k=0}^{12} e_k \quad \text{and}$$

$$\overline{e1} = \sum_{k=19}^{31} e_k.$$

Once the $\overline{e0}$ and $\overline{e1}$ values have been determined, the device can translate each symbol (bit) in the original sequence by simply deciding whether the value is closer to $\overline{e0}$ or $\overline{e1}$. Ideally $\overline{e0}$ and $\overline{e1}$ are well separated. To this end we calculate a symbol separation value, e.g., $\sigma_n = (\overline{e0} - \overline{e1}) / (\overline{|e - e0|} + \overline{|e - e1|})$, where $\overline{|e - e0|}$ is the average error computed over symbols that were decoded as "0"s, and $\overline{|e - e1|}$ is the average error computed over symbols that were decoded as "1"s. In other words, the symbol separation value is the difference in the averages divided by the error. If symbols are nicely separated, this can be a big number like 10 or 50. The maximum value of the symbol separation and the symbol step for which symbol separation value attains the maximum can be stored. Note that, of the 4 steps (which correspond to four phases) we calculate codes for, we report the code which has the best symbol separation. Specifically, the system can determine the following four values during detection: the signal-to-noise ratio, the detection signal with the amplitude, the sum absolute amplitude difference (see above), and the symbol separation (cluster separation/cluster width). The symbol separation provides the quality.

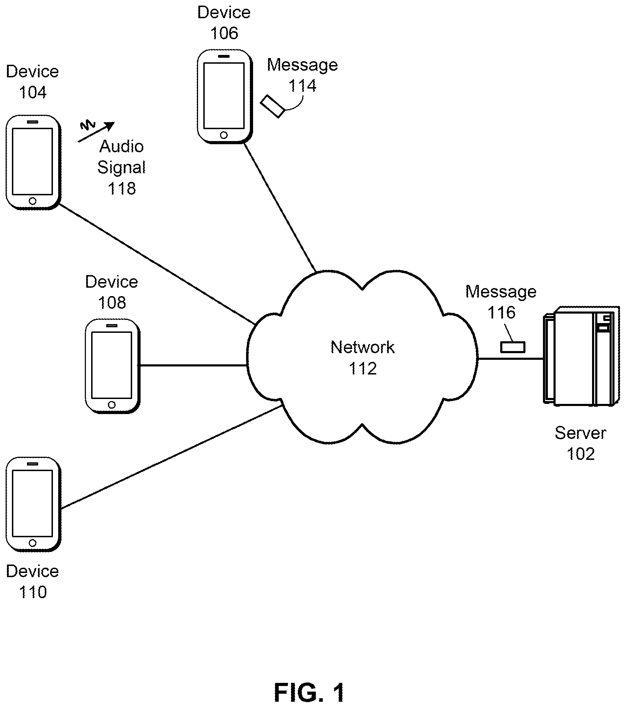

FIG. 1 illustrates a system in accordance with some embodiments described herein.

Devices 104-110 can communicate with each other and/or with server 102 via network 112. In some embodiments described herein, a device (e.g., devices 104-110) can generally be any hardware-based device, now known or later developed, that is capable of communicating with other devices. Examples of devices can include, but are not limited to, desktop computers, laptop computers, handheld computing devices, tablet computing devices, smartphones, automatic teller machines, point of sale systems, etc.

In some embodiments described herein, a device may include one or more mechanisms to detect an event that indicates that a user intends to communicate with another device. Specifically, a device may include one or more inertial sensors (e.g., an accelerometer, gyroscope, etc.) which may be capable of detecting a user gesture that indicates that the user desires to communicate with another device. For example, a user may shake his or her device in proximity to another device to indicate his or her intent to communicate with the other device. As another example, the user may tap the screen of the smartphone or speak into the microphone of the smartphone to indicate his or her intent to communicate. In some embodiments described herein, when the device detects an event that indicates that the user intends to communicate with another device, the device can record the time the event occurred, the location of the device when the event occurred, and/or any other parameter values that may be used to detect an intent to establish a communication channel between two or more devices.

Network 112 can generally include any type of wired or wireless communication channel, now known or later developed, that enables two or more devices to communicate with one another. Network 112 can include, but is not limited to, a local area network, a wide area network, or a combination of networks.

Server 102 can generally be any system that is capable of performing computations and that is capable of communicating with other devices. Server 102 can be a computer system, a distributed system, a system based on cloud computing, or any other system, now known or later developed, that is capable of performing computations.

A device can send a message to a server. For example, device 106 can send message 114 to server 102 through network 112. In response, server 102 can send message 116 to device 106. The reverse sequence of operations is also possible, i.e., the server first sends a message to a device and then the device responds with a message. Finally, in yet another embodiment, the message may be sent only one way (i.e., either from the device to the server or from the server to the device) without requiring that a corresponding message be sent in the reverse direction. In this disclosure, the term "message" generally refers to a group of bits that are used for conveying information. In connection-oriented networks, a message can be a series of bits. In datagram-oriented networks, a message can include one or more units of data, e.g., one or more packets, cells, or frames.

In some embodiments, a device sends a message to a server when the device detects an event that indicates that a user intends to communicate with another user. In some embodiments a device continuously (i.e., at regular and/or irregular intervals) sends messages to the server with codes that the device may have received over the shared audio channel. In some embodiments, a device (e.g., device 104) may transmit a code encoded in an audio signal (e.g., audio signal 118) that is capable of being received by a nearby device (e.g., device 106). In some embodiments, devices may continually listen to codes that are being transmitted over a shared audio channel (e.g., the air surrounding the device). When a device receives a code that was transmitted over the shared audio channel, the device can extract the code (in addition to performing other actions such as transmitting the received code back into the shared audio channel) and send the received code to a server. The server can use the codes received from devices to identify the devices that are near each other and facilitate matching devices with one another.

Message 116 may indicate whether or not server 102 was able to match the event that was received from device 106 with another event that was received from another device. Clocks at different devices may not be synchronized and the location data may not be precise. Consequently, the matching process used by server 102 may need to account for any systematic and/or random variability present in the temporal or spatial information received from different devices.

After events from two devices are matched with each other, the two devices may exchange further information (e.g., contact information, pictures, etc.) with each other. In some embodiments described herein, the subsequent information exchange may be routed through the server that matched the events from the two devices. In other embodiments, the subsequent information exchange may occur directly over a communication session that is established between the two devices. Information exchanged between two communicating nodes (e.g., devices, servers, etc.) may be performed with or without encryption and/or authentication.

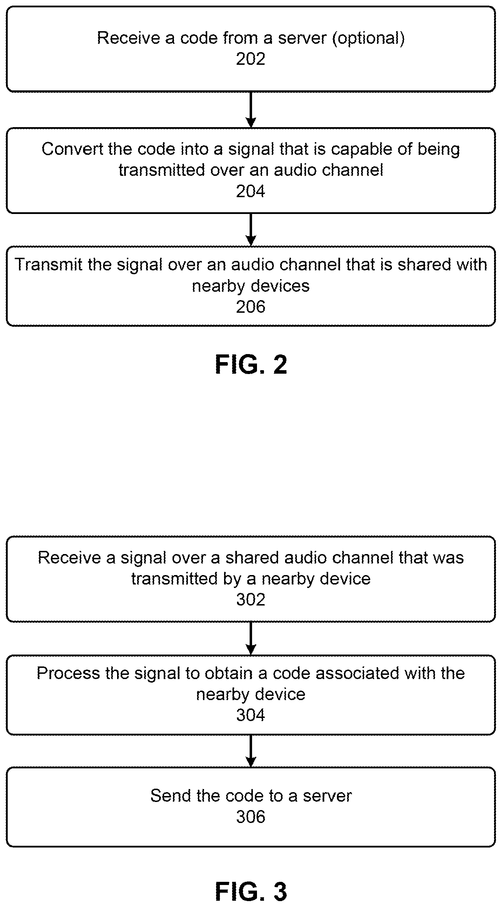

FIG. 2 presents a flowchart that illustrates a process for transmitting a code in accordance with some embodiments described herein. The process shown in FIG. 2 may be performed by device 104.

The process can begin with receiving a code (e.g., a group of bits) from a server (operation 202). This operation may be optional, i.e., a device may already know the code that is associated with itself (e.g., a unique code may be provided to each device in the system). Regardless of how the device determines the code, the device may convert the code into a signal that is capable of being transmitted over an audio channel (operation 204). Next, the system may transmit the signal over an audio channel (e.g., the air between two devices) that is shared with nearby devices (operation 206).

FIG. 3 presents a flowchart that illustrates a process for receiving a code in accordance with some embodiments described herein. The process shown in FIG. 3 may be performed by device 106.

The process can begin with receiving, at a device, a signal over a shared audio channel that was transmitted by a nearby device (operation 302). For example, device 106 may receive the code that was transmitted by device 104. Next, the device that received the signal may process the signal to obtain a code associated with the nearby device (operation 304). For example, device 106 may process the received signal to obtain the code that was sent by device 104. The device may then send the code to a server (operation 306). For example, device 106 may send the code to server 102. This communication between the device and the server may occur via network 112.

In some embodiments, a device (say D1) continuously (i.e., at regular or irregular intervals) transmits a code on a shared audio channel. Devices that are capable of receiving codes over the shared audio channel (which includes device D1) receive the code (e.g., by receiving the audio signal and extracting the code encoded in the audio signal), and then send the code to the server. The server then matches devices based on the codes. Therefore, in one example, device D1 transmits the code, and devices D2 and D3 receive the code and send it to the server. The server determines that devices D2 and D3 are in proximity to one another because both of those devices sent the same code to the server. In another example, device D1 transmits the code, and devices D1 and D2 receive the code and send it to the server. In this example the server determines that the devices D1 and D2 are in proximity to one another because both of them sent the same code to the server.

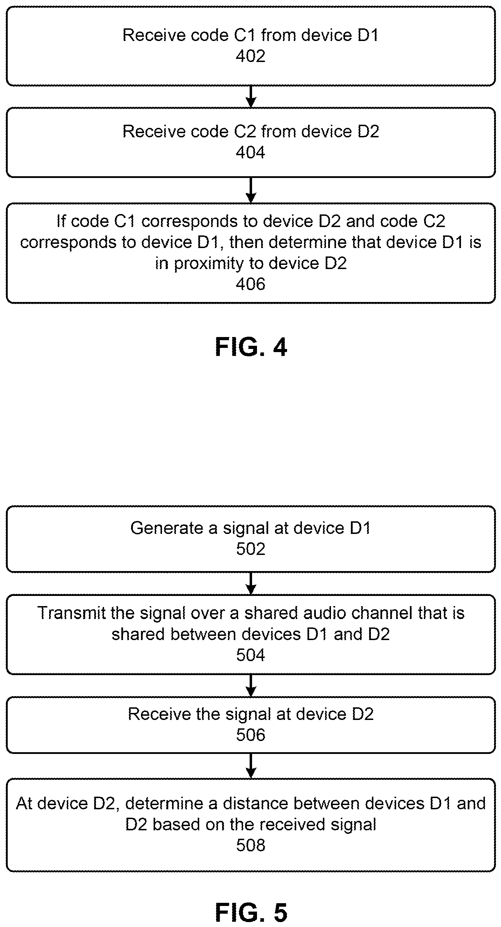

FIG. 4 presents a flowchart that illustrates a process that may be performed by a server in accordance with some embodiments described herein. The process shown in FIG. 4 may be performed by server 102.

The process can begin with receiving, at a server, code C1 from device D1 (operation 402). Next, the server can receive code C2 from device D2 (operation 404). If code C1 corresponds to device D2 and code C2 corresponds to device D1, then the server may determine that device D1 is in proximity to device D2 (operation 406).

FIG. 5 presents a flowchart that illustrates a process that may be performed by a device in accordance with some embodiments described herein. The process shown in FIG. 5 may be performed by devices 104 and 106.

The process can begin with generating a signal at a device, say device D1 (operation 502). Next, the device may transmit the signal over a shared audio channel that is shared between devices D1 and D2 (operation 504). The signal may then be received at device D2 (operation 506). Next, device D2 may determine a distance between devices D1 and D2 based on the received signal (operation 508).

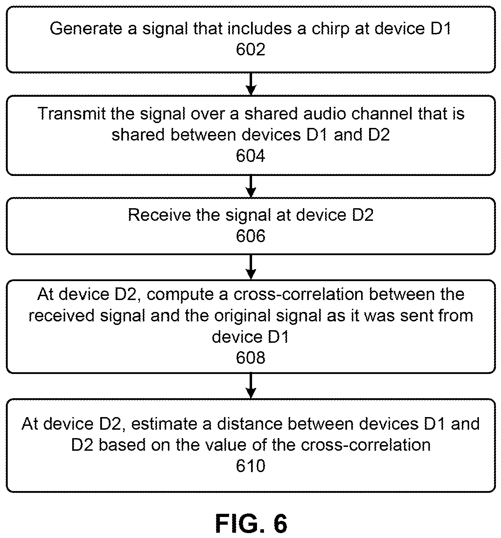

FIG. 6 presents a flowchart that illustrates a process that may be performed by a device in accordance with some embodiments described herein. The process shown in FIG. 6 may be performed by devices 104 and 106. Specifically, FIG. 6 can be considered to be an embodiment of the process shown in FIG. 5.

The process can begin with generating, at device D1, a signal that includes a chirp (operation 602). Next, device D1 can transmit the signal over a shared audio channel that is shared between devices D1 and D2 (operation 604). Next, device D2 may receive the signal (operation 606). Device D2 may then compute a cross-correlation between the received signal and the original signal as it was sent from device D1 (operation 608). Next, device D2 may estimate a distance between devices D1 and D2 based on the value of the cross-correlation (operation 610).

When an audio signal has a chirp, the cross-correlation between the transmitted and received chirp (e.g., when a first device transmits a chirp, and then receives the chirp back from a second device, the first device can compute a cross-correlation between the transmitted and received chirps) can pinpoint the delay with a very high degree of accuracy. Specifically, in some embodiments, when a transmitted chirp is cross-correlated with the received chirp, it results in a sin(x)/x function which has a sharp peak that can be used to precisely measure the delay between transmitting and receiving the chirp.

Specifically, in some embodiments, the following sequence of events occurs: (1) device D1 transmits chirp C1 and notes the timestamp T1 when chirp C1 was sent, (2) device D2 receives chirp C1, (3) device D2 waits for a fixed amount of time W (which could be zero), (4) device D2 transmits chirp C1, (5) device D1 receives chirp C1 and notes the timestamp T2 when chirp C1 was received, and (6) device D1 computes the distance between devices D1 and D2 based on (T2 - T1 - W). A similar sequence of events occurs when device D2 transmits its own chirp C2. Specifically, the distance is equal

to $$V \cdot \frac{T2 - T1 - W}{2}$$ where $V$ is the velocity of sound. In a variation, device D1 transmits a chirp and device D2 transmits a chirp, and the distance is

$$V \cdot \frac{T3 - T1 + T4 - T2}{2},$$

where $T1$ and $T2$ are the timestamps at which the chirps are transmitted from devices D1 and D2, respectively, and $T3$ and $T4$ are the timestamps when the chirps are received by devices D1 and D2, respectively. Note that T1 and T3 are timestamps according to device D1's clock and T2 and T4 are timestamps according to device D2's clock.

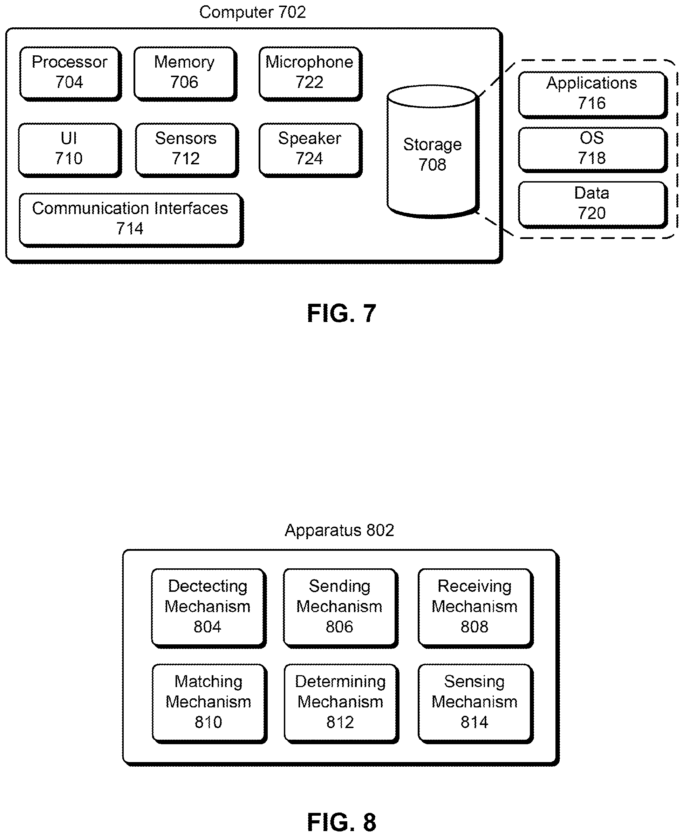

FIG. 7 illustrates a computer in accordance with some embodiments described herein.

A computer can generally refer to any hardware based apparatus that is capable of performing computations. Specifically, devices 104-110 and server 102 shown in FIG. 1 can each be a computer. As shown in FIG. 7, computer 702 can include processor 704, memory 706, user interface 710, sensors 712, communication interfaces 714, storage 708, microphone 722, and speaker 724.

User interface 710 can generally include one or more input/output mechanisms for communicating with a user (e.g., a keypad, a touchscreen, a microphone, a speaker, a display, etc.). Microphone 722 and speaker 724 may be dedicated to sending and receiving codes from neighboring devices. In some embodiments, the microphone and speaker that are part of user interface 710 may also be used for sending and receiving codes. In these embodiments, separate microphone 722 and speaker 724 may not be present.

Sensors 712 can include one or more inertial sensors (e.g., accelerometer, gyroscope, etc.) and/or other types of sensors (e.g., light meters, pressure gauges, thermometers, etc.). Communication interfaces 714 can generally include one or more mechanisms for communicating with other computers (e.g., Universal Serial Bus interfaces, network interfaces, wireless interfaces, etc.). Storage 708 may be a non-transitory storage medium, and may generally store instructions that, when loaded into memory 706 and executed by processor 704, cause computer 702 to perform one or more processes for facilitating communication with another computer. Specifically, storage 708 may include applications 716, operating system 718, and data 720. Applications 716 may include software instructions that implement, either wholly or partly, one or more methods and/or processes that are implicitly and/or explicitly described in this disclosure.

Computer 702 has been presented for illustration purposes only. Many modifications and variations will be apparent to practitioners having ordinary skill in the art. Specifically, computer 702 may include a different set of components than those shown in FIG. 7.

FIG. 8 illustrates an apparatus in accordance with some embodiments described herein.

Apparatus 802 can comprise a number of hardware mechanisms, which may communicate with one another via a wired or wireless communication channel. A hardware mechanism can generally be any piece of hardware that is designed to perform one or more actions. For example, a sending mechanism can refer to transmitter circuitry, and a receiving mechanism can refer to receiver circuitry. In some embodiments described herein, apparatus 802 can include detecting mechanism 804, sending mechanism 806, receiving mechanism 808, matching mechanism 810, determining mechanism 812, and sensing mechanism 814. The apparatus shown in FIG. 8 is for illustration purposes only. Many modifications and variations will be apparent to practitioners having ordinary skill in the art. Specifically, apparatus 802 may include a different set of mechanisms than those shown in FIG. 8. Apparatus 802 can be capable of performing one or more methods and/or processes that are implicitly or explicitly described in this disclosure.

In some embodiments, detecting mechanism 804 may be designed to detect an event based on an action performed by a user. Specifically, detecting mechanism 804 may detect an event based on measurements received from sensing mechanism 814. Sending mechanism 806 may be designed to send information of the event to a server. Sending mechanism 806 may also be designed to transmit a code via a shared audio channel. Receiving mechanism 808 may be designed to receive a response from the server that indicates whether or not the event matched another event that was sent to the server from another apparatus. Receiving mechanism 808 may also be designed to receive a code from a nearby device that was transmitted over a shared audio channel.

In some embodiments, receiving mechanism 808 may be designed to receive information of an event from another apparatus, wherein the event indicates that a user intends to communicate with another user. Matching mechanism 810 may be designed to match the event with one or more events from a set of events based on the information of the event. Sending mechanism 806 may be designed to send a response to another apparatus.

The foregoing descriptions of embodiments of the present invention have been presented only for purposes of illustration and description. They are not intended to be exhaustive or to limit the present invention to the forms disclosed. Accordingly, many modifications and variations will be apparent to practitioners having ordinary skill in the art. Additionally, the above disclosure is not intended to limit the present invention. The scope of the present invention is defined by the appended claims.

## Claims

1. A method for matching devices (104, 106), the method comprising:

   transmitting (206), by a first device (104), a first audio signal (118) that encodes a first code over an audio channel that is shared between the first device (104) and a second device (106);
   transmitting (206), by the second device (106), a second audio signal that encodes a second code over the audio channel;
   receiving (302), by the first device (104), the second audio signal over the audio channel, and extracting (304), by the first device (104), the second code from the second audio signal;
   receiving (302), by the second device (106), the first audio signal (118) over the audio channel, and extracting (304), by the second device (106), the first code from the first audio signal;
   sending (306), by the first device (104), the second code to a server (102);
   sending (306), by the second device (106), the first code to the server (102); and
   upon receiving (402, 404) the first code from the second device (106) and the second code from the first device (104), determining (406), by the server (102), that the first device (104) is in proximity to the second device (106);
   **characterized in that** the first and second devices (104, 106) transmit the first and second audio signals at audio frequencies outside the range of frequencies readily detectable by a human ear; and
   the first and second devices (104, 106) raise the audio volume during the transmission of the first and second audio signals and restore the audio volume upon completing said transmission.

2. The method of claim 1, further comprising:

   transmitting, by the second device (106), a third audio signal that encodes the first code;

receiving, by the first device (104), the third audio signal over the audio channel and extracting, by the first device (104), the first code from the third audio signal; and

determining, by the first device (104), a distance between the first device and the second device based on the third audio signal.

3. The method of claim 2, wherein the first and third audio signals include timestamps, and wherein the first device (104) determines the distance based on the timestamps.

4. The method of claim 3, wherein the first and third audio signals further include chirps, and wherein the first device (104) determines the distance based on the timestamps and chirps.

5. The method of claim 1, wherein the first device (104) determines a relative velocity between the first (104) and second devices (106) based on the second audio signal.

6. The method of claim 1, further comprising using a trapezoid frequency window with an end cap length of 50 samples for the transmission.

7. A system, comprising:

a first device (104) configured to periodically transmit a first audio signal that encodes a first code over an audio channel that is shared between the first device (104) and a second device (106);

the second device (106) configured to periodically transmit a second audio signal that encodes a second code over the audio channel;

wherein the first device (104) is further configured to:

receive the second audio signal over the audio channel, and

extract the second code from the second audio signal;

wherein the second device is further configured to:

receive the first audio signal over the audio channel, and

extract the first code from the first audio signal;

wherein the first device (104) is further configured to send the second code to a server (102);

wherein the second device (106) is further configured to send the first code to the server (102); and the server (102) configured to determine that the first device (104) is in proximity to the second device (106) upon receiving the first code from the second device (106) and the second code from the first device (104);

**characterized in that** the first and second devices (104, 106) are further configured to:

transmit the first and second audio signals at audio frequencies outside the range of frequencies readily detectable by a human ear; and

raise the audio volume during transmission of the first and second audio signals and restore the audio volume upon completing said transmission.

8. The system of claim 7, wherein the second device (106) is further configured to transmit a third audio signal that encodes the first code; wherein the first device (104) is further configured to:

receive the third audio signal over the audio channel, and extract the first code from the third audio signal; and

wherein the first device (104) is further configured to determine a distance between the first device and the second device based on the third audio signal.

9. The system of claim 8, wherein the first and third audio signals include time stamps, and wherein the first device (104) is configured to determine the distance based on the timestamps.

10. The method of claim 9, wherein the first and third audio signals further include chirps, and wherein the first device (104) is configured to determine the distance based on the timestamps and chirps.

11. The system of claim 7, wherein the first device (104) is further configured to determine a relative velocity between the first and second devices (104, 106) based on the second audio signal.

12. The system of claim 7 wherein a trapezoid frequency window with an end cap length of 50 samples is used for the transmission.

13. A method for matching devices, the method comprising:

transmitting, by a first device (D1), a first audio signal that encodes a first code over an audio channel that is shared between multiple devices;

receiving, by a second device (D2), the first audio signal over the audio channel, and extracting, by the second device (D2), the first code from the first audio signal;

receiving, by a third device (D3), the first audio signal over the audio channel, and extracting, by the third device (D3), the first code from the first audio signal;

sending, by the second device (D2), the first code to a server (102);

sending, by the third device (D3), the first code to the server (102); and upon receiving the first code from the second and third devices, determining, by the server (102), that the second and third devices are in proximity to each other; **characterized in that** the first, second and third devices (D1, D2 and D3) transmit the first and second audio signals at audio frequencies outside the range of frequencies readily detectable by a human ear; and

the first, second and third devices (D1, D2 and D3) raise the audio volume during transmission of the first and second audio signals and restore the audio volume upon completing said transmission.

14. The method of claim 13, wherein the third device (D3) is the same as the first device (D1), and the second device (D2) is different from the first device (D1).

15. The method of claim 13, wherein the first (D1), second (D2), and third devices (D3) are different devices.

16. The method of claim 13, further comprising using a trapezoid frequency window with an end cap length of 50 samples for the transmission.

**Patentansprüche**

1. Verfahren zum Abgleichen von Geräten (104, 106), das Verfahren umfassend:

Übertragen (206), durch ein erstes Gerät (104), eines ersten Audiosignals (118), das einen ersten Code über einen Audiokanal kodiert, der zwischen dem ersten Gerät (104) und einem zweiten Gerät (106) geteilt wird;

Übertragen (206), durch das zweite Gerät (106), eines zweiten Audiosignals, das einen zweiten Code über den Audiokanal kodiert;

Empfangen (302), durch das erste Gerät (104), des zweiten Audiosignals über den Audiokanal, und Extrahieren (304), durch das erste Gerät (104), des zweiten Codes vom zweiten Audiosignal;

Empfangen (302), durch das zweite Gerät (106), des ersten Audiosignals (118) über den Audiokanal, und Extrahieren (304), durch das zweite Gerät (106), des ersten Codes vom ersten Audiosignal;

Senden (306), durch das erste Gerät (104), des zweiten Codes an einen Server (102);

Senden (306), durch das zweite Gerät (106), des ersten Codes an den Server (102); und

bei Empfangen (402, 404) des ersten Codes vom zweiten Gerät (106) und des zweiten Codes vom ersten Gerät (104), Ermitteln (406), durch den Server (102), dass das erste Gerät (104) sich in Nähe zum zweiten Gerät (106) befindet; **dadurch gekennzeichnet, dass** die ersten und zweiten Geräte (104, 106) die ersten und zweiten Audiosignale in Audiofrequenzen außerhalb des für das menschliche Ohr leicht feststellbaren Frequenzbereichs übertragen; und

die ersten und zweiten Geräte (104, 106) das Audiovolumen während der Übertragung der ersten und zweiten Audiosignale anheben und das Audiovolumen bei Vervollständigung der Übertragung wiederherstellen.

2. Verfahren nach Anspruch 1, ferner umfassend:

Übertragen, durch das zweite Gerät (106), eines dritten Audiosignals, das den ersten Code kodiert;

Empfangen, durch das erste Gerät (104), des dritten Audiosignals über den Audiokanal und Extrahieren, durch das erste Gerät (104), des ersten Codes vom dritten Audiosignal;

und Ermitteln, durch das erste Gerät (104), einer Distanz zwischen dem ersten Gerät und dem zweiten Gerät, basierend auf dem dritten Audiosignal.

3. Verfahren nach Anspruch 2, wobei die ersten und dritten Audiosignale Zeitstempel beinhalten und wobei das erste Gerät (104) die Distanz basierend auf den Zeitstempeln ermittelt.

4. Verfahren nach Anspruch 3, wobei die ersten und dritten Audiosignale ferner Gezwitscher beinhalten und wobei das erste Gerät (104) die Distanz basierend auf den Zeitstempeln und dem Gezwitscher ermittelt.

5. Verfahren nach Anspruch 1, wobei das erste Gerät (104) eine relative Geschwindigkeit zwischen den ersten (104) und zweiten Geräten (106) ermittelt, basierend auf dem zweiten Audiosignal.

6. Verfahren nach Anspruch 1, ferner umfassend die Nutzung eines trapezförmigen Frequenzfensters mit einer Endbegrenzungslänge von 50 Stichproben für die Übertragung.

7. System, umfassend:

ein erstes Gerät (104), konfiguriert, periodisch ein erstes Audiosignal zu übertragen, das einen ersten Code über einen Audiokanal kodiert, der zwischen dem ersten Gerät (104) und einem zweiten Gerät (106) geteilt wird;
das zweite Gerät (106), konfiguriert, periodisch ein zweites Audiosignal zu übertragen, das einen zweiten Code über den Audiokanal kodiert;
wobei das erste Gerät (104) ferner konfiguriert ist:
das zweite Audiosignal über den Audiokanal zu empfangen und den zweiten Code vom zweiten Audiosignal zu extrahieren, wobei das zweite Gerät ferner konfiguriert ist:

das erste Audiosignal über den Audiokanal zu empfangen und den ersten Code vom ersten Audiosignal zu extrahieren; wobei das erste Gerät (104) ferner konfiguriert ist, einen zweiten Code an einen Server (102) zu senden; wobei das zweite Gerät (106) ferner konfiguriert ist, den ersten Code an den Server (102) zu senden; und der Server (102) konfiguriert ist, zu ermitteln, dass das erste Gerät (104) sich beim Empfangen des ersten Codes vom zweiten Gerät (106) und des zweiten Codes vom ersten Gerät (104) in Nähe zum zweiten Gerät (106) befindet;

**dadurch gekennzeichnet, dass** die ersten und zweiten Geräte (104; 106) ferner konfiguriert sind:

die ersten und zweiten Audiosignale in Audiofrequenzen außerhalb des für das menschliche Ohr leicht feststellbaren Frequenzbereichs zu übertragen; und
das Audiovolumen während der Übertragung der ersten und zweiten Audiosignale anzuheben und das Audiovolumen bei Vervollständigung der Übertragung wiederherzustellen.

8. System nach Anspruch 7, wobei das zweite Gerät (106) ferner konfiguriert ist, ein drittes Audiosignal, das den ersten Code kodiert, zu übertragen, wobei das erste Gerät (104) ferner konfiguriert ist:

das dritte Audiosignal über den Audiokanal zu empfangen und den ersten Code aus dem dritten Audiosignal zu extrahieren; und
wobei das erste Gerät (104) ferner konfiguriert ist, eine Distanz zwischen dem ersten Gerät und dem zweiten Gerät basierend auf dem dritten Audiosignal zu ermitteln.

9. System nach Anspruch 8, wobei die ersten und dritten Audiosignale Zeitstempel beinhalten und wobei das erste Gerät (104) konfiguriert ist, die Distanz basierend auf den Zeitstempeln zu ermitteln.

10. Verfahren nach Anspruch 9, wobei die ersten und dritten Audiosignale ferner Gezwitscher beinhalten und wobei das erste Gerät (104) konfiguriert ist, die Distanz basierend auf den Zeitstempeln und dem Gezwitscher zu ermitteln.

11. System nach Anspruch 7, wobei das erste Gerät (104) ferner konfiguriert ist, eine relative Geschwindigkeit zwischen den ersten und zweiten Geräten (104, 106) basierend auf dem zweiten Audiosignal zu ermitteln.

12. System nach Anspruch 7, wobei ein trapezförmiges Frequenzfenster mit einer Endbegrenzungslänge von 50 Stichproben für die Übertragung genutzt wird.

13. Verfahren zum Abgleichen von Geräten, das Verfahren umfassend:

das Übertragen, durch ein erstes Gerät (D1), eines ersten Audiosignals, das einen ersten Code über einen Audiokanal kodiert, der zwischen mehreren Geräten geteilt wird;
Empfangen, durch ein zweites Gerät (D2), des ersten Audiosignals über den Audiokanal und Extrahieren, durch das zweite Gerät (D2), des ersten Codes aus dem ersten Audiosignal;
Empfangen, durch ein drittes Gerät (D3), des ersten Audiosignals über den Audiokanal und Extrahieren, durch das dritte Gerät (D3) des ersten Codes aus dem ersten Audiosignal; Senden, durch das zweite Gerät (D2), des ersten Codes an einen Server (102); Senden, durch das dritte Gerät (D3), des ersten Codes an den Server (102); und beim Empfangen des ersten Codes von zweiten und dritten Geräten, Ermitteln, durch den Server (102), dass sich die zweiten und dritten Geräte in Nähe zueinander befinden; **dadurch gekennzeichnet, dass** die ersten, zweiten und dritten Geräte (D1, D2, D3) die ersten und zweiten Audiosignale in Audiofrequenzen außerhalb des für das menschliche Ohr leicht feststellbaren Frequenzbereichs übertragen; und
die ersten, zweiten und dritten Geräte (D1, D2 und D3) das Audiovolumen während der Übertragung der ersten und zweiten Audiosignale anheben und das Audiovolumen bei Vervollständigung der Übertragung wiederherstellen.

14. Verfahren nach Anspruch 13, wobei das dritte Gerät (D3) das gleiche ist wie das erste Gerät (D1) und das zweite Gerät (D2) sich vom ersten Gerät (D1) unterscheidet.

**15.** Verfahren nach Anspruch 13, wobei die ersten (D1), zweiten (D2) und dritten Geräte (D3) unterschiedliche Geräte sind.

**16.** Verfahren nach Anspruch 13, ferner umfassend die Nutzung eines trapezförmigen Frequenzfensters mit einer Endbegrenzungslänge von 50 Stichproben für die Übertragung.

**Revendications**

**1.** Procédé de mise en correspondance de dispositifs (104, 106), le procédé comprenant :

la transmission (206), par un premier dispositif (104), d'un premier signal audio (118) qui code un premier code sur un canal audio qui est partagé entre le premier dispositif (104) et un deuxième dispositif (106) ;
la transmission (206), par le deuxième dispositif (106), d'un deuxième signal audio qui code un second code sur le canal audio ;
la réception (302), par le premier dispositif (104), du deuxième signal audio sur le canal audio, et l'extraction (304), par le premier dispositif (104), du second code à partir du deuxième signal audio ;
la réception (302), par le deuxième dispositif (106), du premier signal audio (118) sur le canal audio, et l'extraction (304), par le deuxième dispositif (106), du premier code à partir du premier signal audio ;
l'envoi (306), par le premier dispositif (104), du second code à un serveur (102) ;
l'envoi (306), par le deuxième dispositif (106), du premier code au serveur (102) ; et
lors de la réception (402, 404) du premier code à partir du deuxième dispositif (106) et du second code à partir du premier dispositif (104), la détermination (406), par le serveur (102), que le premier dispositif (104) est à proximité du deuxième dispositif (106) ;
**caractérisé en ce que** les premier et deuxième dispositifs (104, 106) transmettent les premier et second signaux audio à des fréquences audio en dehors de la plage de fréquences facilement détectable par une oreille humaine ; et
les premier et deuxième dispositifs (104, 106) augmentant le volume audio durant la transmission des premier et second signaux audio et restaurent le volume audio lors de l'achèvement de ladite transmission.

**2.** Procédé selon la revendication 1, comprenant en outre :

la transmission, par le deuxième dispositif (106), d'un troisième signal audio qui code le premier code ;
la réception, par le premier dispositif (104), du troisième signal audio par le canal audio et l'extraction, par le premier dispositif (104), du premier code à partir du troisième signal audio ; et
la détermination, par le premier dispositif (104), d'une distance entre le premier dispositif et le deuxième dispositif sur la base du troisième signal audio.

**3.** Procédé selon la revendication 2, dans lequel les premier et troisième signaux audio comprennent des horodatages, et dans lequel le premier dispositif (104) détermine la distance sur la base des horodatages.

**4.** Procédé selon la revendication 3, dans lequel les premier et troisième signaux audio comportent en outre des gazouillis, et dans lequel le premier dispositif (104) détermine la distance sur la base des horodatages et des gazouillis.

**5.** Procédé selon la revendication 1, dans lequel le premier dispositif (104) détermine une vitesse relative entre les premier (104) et second (106) dispositifs sur la base du deuxième signal audio.

**6.** Procédé selon la revendication 1, comprenant en outre l'utilisation d'une fenêtre de fréquence trapézoïdale avec une longueur de bouchon de 50 échantillons pour la transmission.

**7.** Système, comprenant :

un premier dispositif (104) configuré pour transmettre périodiquement un premier signal audio qui code un premier code sur un canal audio qui est partagé entre le premier dispositif (104) et un deuxième dispositif (106) ;
le deuxième dispositif (106) étant configuré pour transmettre périodiquement un deuxième signal audio qui code un second code par le canal audio ;
où le premier dispositif (104) est en outre configuré pour :
recevoir le deuxième signal audio sur le canal audio, et extraire le second code à partir du deuxième signal audio ;
où le deuxième dispositif est en outre configuré pour :
recevoir le premier signal audio par le canal audio, et extraire le premier code à partir du premier signal audio ;
où le premier dispositif (104) est en outre configuré pour envoyer le second code à un serveur (102) ; où le deuxième dispositif (106) est en outre configuré pour envoyer le premier code au serveur (102) ; et le serveur (102) est configuré pour déterminer que le premier dispositif (104) est à proximité du deuxième dispositif (106) lors de la réception du premier code à partir du deuxième dispositif (106) et du second code à partir du premier dispositif (104) ;

**caractérisé en ce que** les premier et deuxième dispositifs (104, 106) sont en outre configurés pour :

> transmettre les premier et deuxième signaux audio à des fréquences audio en dehors de la plage de fréquences facilement détectable par une oreille humaine ; et augmenter le volume audio durant la transmission des premier et deuxième signaux audio et restaurer le volume audio lors de l'achèvement de ladite transmission.

8.  Système selon la revendication 7, dans lequel le deuxième dispositif (106) est en outre configuré pour transmettre un troisième signal audio qui code le premier code ; où le premier dispositif (104) est en outre configuré pour :

> recevoir le troisième signal audio par le canal audio, et extraire le premier code à partir du troisième signal audio ; et où le premier dispositif (104) est en outre configuré pour déterminer une distance entre le premier dispositif et le deuxième dispositif sur la base du troisième signal audio.

9.  Système selon la revendication 8, dans lequel les premier et troisième signaux audio comprennent des horodatages, et dans lequel le premier dispositif (104) est configuré pour déterminer la distance sur la base des horodatages.

10. Procédé selon la revendication 9, dans lequel les premier et troisième signaux audio comportent en outre des gazouillis, et dans lequel le premier dispositif (104) est configuré pour déterminer la distance sur la base des horodatages et des gazouillis.

11. Système selon la revendication 7, dans lequel le premier dispositif (104) est en outre configuré pour déterminer une vitesse relative entre les premier et deuxième dispositifs (104, 106) sur la base du deuxième signal audio.

12. Système selon la revendication 7, dans lequel une fenêtre de fréquence trapézoïdale avec une longueur de bouchon de 50 échantillons est utilisée pour la transmission.

13. Procédé de mise en correspondance de dispositifs, le procédé comprenant :

la transmission, par un premier dispositif (D1), d'un premier signal audio qui code un premier code sur un canal audio qui est partagé entre de multiples dispositifs ;

la réception, par un deuxième dispositif (D2), du premier signal audio par le canal audio, et l'extraction, par le deuxième dispositif (D2), du premier code à partir du premier signal audio ;

la réception, par un troisième dispositif (D3), du premier signal audio par le canal audio, et l'extraction, par le troisième dispositif (D3), du premier code à partir du premier signal audio ;

l'envoi, par le deuxième dispositif (D2), du premier code à un serveur (102) ;

l'envoi, par le troisième dispositif (D3), du premier code au serveur (102) ; et lors de la réception du premier code à partir des deuxième et troisième dispositifs, la détermination, par le serveur (102), que les deuxième et troisième dispositifs sont à proximité l'un de l'autre ;

**caractérisé en ce que** les premier, deuxième et troisième dispositifs (D1, D2 et D3) transmettent les premier et deuxième signaux audio à des fréquences audio en dehors de la plage de fréquences facilement détectable par une oreille humaine ; et

les premier, deuxième et troisième dispositifs (D1, D2 et D3) augmentent le volume audio durant la transmission des premier et deuxième signaux audio et restaurent le volume audio lors de l'achèvement de ladite transmission.

14. Procédé selon la revendication 13, dans lequel le troisième dispositif (D3) est le même que le premier dispositif (D1), et le deuxième dispositif (D2) est différent du premier dispositif (D1).

15. Procédé selon la revendication 13, dans lequel les premier (D1), deuxième (D2), et troisième (D3) dispositifs sont des dispositifs différents.

16. Procédé selon la revendication 13, comprenant en outre l'utilisation d'une fenêtre de fréquence trapézoïdale avec une longueur de bouchon de 50 échantillons pour la transmission.

**FIG. 1**

Receive a code from a server (optional)
202

Convert the code into a signal that is capable of being
transmitted over an audio channel
204

Transmit the signal over an audio channel that is shared with
nearby devices
206

## FIG. 2

Receive a signal over a shared audio channel that was
transmitted by a nearby device
302

Process the signal to obtain a code associated with the
nearby device
304

Send the code to a server
306

## FIG. 3

Receive code C1 from device D1
402

Receive code C2 from device D2
404

If code C1 corresponds to device D2 and code C2
corresponds to device D1, then determine that device D1 is
in proximity to device D2
406

# FIG. 4

Generate a signal at device D1
502

Transmit the signal over a shared audio channel that is
shared between devices D1 and D2
504

Receive the signal at device D2
506

At device D2, determine a distance between devices D1 and
D2 based on the received signal
508

# FIG. 5

Generate a signal that includes a chirp at device D1
602

Transmit the signal over a shared audio channel that is
shared between devices D1 and D2
604

Receive the signal at device D2
606

At device D2, compute a cross-correlation between the
received signal and the original signal as it was sent from
device D1
608

At device D2, estimate a distance between devices D1 and
D2 based on the value of the cross-correlation
610

# FIG. 6

Computer 702

| Processor 704 | Memory 706 | Microphone 722 |

Storage 708

Applications 716

| UI 710 | Sensors 712 | Speaker 724 |

OS 718

Data 720

Communication Interfaces 714

## FIG. 7

Apparatus 802

| Dectecting Mechanism 804 | Sending Mechanism 806 | Receiving Mechanism 808 |

| Matching Mechanism 810 | Determining Mechanism 812 | Sensing Mechanism 814 |

## FIG. 8

**EP 2 783 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010134817 A2
- US 2009233551 A1
- US 2010013711 A1